# EUROPÄISCHE PATENTSCHRIFT

(11) **EP 2 676 349 B1**
(45) Veröffentlichungstag und Bekanntmachung des Hinweises auf die Patenterteilung: **31.10.2018**
(21) Anmeldenummer: 12700616.1
(22) Anmeldetag: 18.01.2012
(51) Int. Cl.: H02J 7/00

(54) **LADEGERÄT FÜR EINEN AKKUMULATOR**
CHARGER FOR A BATTERY
CHARGEUR POUR UNE BATTERIE

(30) Priorität: 16.02.2011 DE 102011011429
(43) Veröffentlichungstag der Anmeldung: 25.12.2013
(73) Patentinhaber: SEW-EURODRIVE GmbH & Co. KG, 76646 Bruchsal (DE)
(72) Erfinder: BUDZEN, Harald, 76829 Landau (DE)
(86) Internationale Anmeldenummer: PCT/EP2012/000211
(87) Internationale Veröffentlichungsnummer: WO 2012/110186

(56) Entgegenhaltungen:
- EP-A2- 0 851 556
- WO-A1-2008/128296
- US-A- 4 238 721
- US-A- 5 965 996
- US-A1- 2003 067 281
- US-A1- 2006 269 312

## Beschreibung

Die Erfindung betrifft ein Ladegerät für einen Akkumulator.

Es ist allgemein bekannt, dass Energiespeicher in Reihe geschaltete Akkuzellen aufweisen, wobei zum Aufladen des Energiespeichers dem Energiespeicher ein gemeinsamer Ladestrom zugeführt wird.

Aus der WO 2008/128296 A1 ist ein Batteriemanagementsystem bekannt.

Aus der US 4 238 721 A ist ein System für das Laden einer Serienschaltung von elektrochemischen Zellen bekannt.

Aus der EP 0 851 556 A2 ist ein Batterieladegerät bekannt.

Aus der US 2003/067281 A1 ist ein System für das Monitoring und Steuern eines Energiespeicherzellenpakets bekannt.

Aus der US 5 965 996 A ist ein Scooter mit einer Balancerschaltung bekannt.

Aus der US 2006/269312 A1 ist als nächstliegender Stand der Technik ein Ladegerät für einen Akkumulator bekannt.

Der Erfindung liegt daher die Aufgabe zugrunde, ein Ladegerät für einen Akkumulator weiterzubilden, wobei der Umweltschutz verbessert sein soll.

Erfindungsgemäß wird die Aufgabe bei dem Ladegerät nach den in Anspruch 1 angegebenen Merkmalen gelöst.

Wichtige Merkmale der Erfindung bei dem Ladegerät sind, dass das Ladegerät für einen Akkumulator, welcher in Reihe geschaltete Akkuzellen aufweist, mit einer Anordnung zur Steuerung des Ladestroms für eine Akkuzelle vorgesehen ist,
wobei die Anordnung einen steuerbaren Schalter aufweist, mit welchem der Ladestrom an der Akkuzelle vorbeileitbar ist, insbesondere als Bypassstrom,
wobei ein Mittel zum Vergleichen eines ersten, der an der Akkuzelle anliegenden Spannung entsprechenden Spannungswertes mit einem Referenzspannungswert vorgesehen ist, dessen Ausgangssignal als Ansteuersignal dem steuerbaren Schalter zugeleitet wird und außerdem einem galvanisch getrennten Meldekanal, über welchen ein Analogwert übermittelbar ist.

Von Vorteil ist dabei, dass jeder Akkuzelle eine solche Anordnung zur Bypass-Stromführung zuordenbar ist. Auf diese Weise ist der Ladestrom an der Akkuzelle vorbeiführbar, wenn diese aufgeladen ist. Somit ist die Akkuzelle schützbar vor Überladung und somit die Standzeit verlängert, was durch den so bewirkten geringeren Materialverbrauch den Umweltschutz verbessert.

Insbesondere wird die Ladespannung beziehungsweise Akkuzellenspannung mit einem kritischen Wert verglichen, der eine Überladung zur Folge hätte. Außerdem wird sie mit einer Sollspannung verglichen, bei deren Unterschreiten der Ladestrom in die Akkuzelle und bei deren Überschreiten der Ladestrom an der Akkuzelle vorbeigeführt wird.

Bei einer vorteilhaften Ausgestaltung ist ein Mittel zum Vergleichen eines zweiten, der an der Akkuzelle anliegenden Spannung entsprechenden Spannungswertes mit einem kritischen Spannungswert vorgesehen, dessen Ausgangssignal einem galvanisch getrennten Meldekanal zugeführt wird, über den ein analoger Wert übermittelbar ist. Von Vorteil ist dabei, dass einer übergeordneten Steuerung das Überschreiten einer kritischen Akkuzellenspannung gemeldet wird, so dass der Ladevorgang in diesem Fehlerfall stoppbar ist.

Bei einer vorteilhaften Ausgestaltung sind der erste und der zweite Spannungswert von einem Spannungsteiler erzeugt, der feinabgleichbar ist, insbesondere durch Parallelschaltung zweier Widerstände,
insbesondere wobei beim Feinabgleich die Spannungsdifferenz zwischen erstem und zweitem Spannungswert im Wesentlichen konstant bleibt. Von Vorteil ist dabei, dass mittels des Feinabgleichs die Sollspannung und die kritische Spannung justierbar sind, wobei der Spannungsabstand zwischen den beiden Spannungen konstant bleibt. Somit ist eine Akkuzellentypische Spannungsdifferenz zwischen Sollspannung und kritischer Überspannung in einfacher Weise vorgebbar. Insbesondere muss nur ein einziger Feinabgleich ausgeführt werden und nicht zwei Feinabgleiche.

Bei einer vorteilhaften Ausgestaltung bilden die Meldekanäle einen analogen Zweileiter-Meldebus, insbesondere also auf einem selben Buskanal geführt sind. Von Vorteil ist dabei, dass ein wenig aufwendiger Meldebus geschaffen ist, wobei der Ladezustand durch den von der jeweiligen Anordnung am Bus wirksam gemachten Widerstand abbildbar ist Die übergeordnete Steuerung ist also in der Lage, aus dem Gesamtwiderstand am Bus den Ladezustand zu bestimmen und entsprechend den Ladestrom zu steuern.

Bei einer vorteilhaften Ausgestaltung wird bei Ausfall der Spannung an der Akkuzelle oder bei Unterschreiten eines kritischen Spannungsbetrages der an der Akkuzelle anliegenden Spannung die Versorgung der Mittel zum Vergleichen derart unterbrochen, dass die beiden Leitungen des Zweileitermeldebusses nicht kurzgeschlossen werden und auch kein im Wesentlichen endlicher Widerstand zwischen ihnen angelegt wird. Von Vorteil ist dabei, dass bei Ausfall der Ladespannung keine Fehlmeldung über den Zweileiterbus gemeldet wird, da das Wirksammachen eines Widerstandes oder einer Verbindung zwischen den Leitungen des Meldebusses verhinderbar ist.

Bei einer vorteilhaften Ausgestaltung werden bei Überschreiten des kritischen Spanungswertes die beiden Leitungen des Zweileiterbusses kurzgeschlossen, insbesondere mittels eines galvanisch getrennt angeordneten Schalter, insbesondere eines Optokopplers. Von Vorteil ist dabei, dass mittels des Kurzschließens, also Verbindens, der Leitungen des Zweileiterbusses ein störzustand weitermeldbar ist an die übergeordnete Steuerung, von der daraufhin der Ladestrom unterbrechbar ist.

Bei einer vorteilhaften Ausgestaltung wird bei Überschreiten des kritischen Referenz-Spanungswertes zwischen den beiden Leitungen des Zweileiterbusses ein Widerstand angelegt, insbesondere mittels eines galvanisch getrennt angeordneten Schalter, insbesondere eines Optokopplers. Von Vorteil ist dabei, dass eine Überspannung weitermeldbar ist über den Bus in einfacher Weise.

Bei einer vorteilhaften Ausgestaltung ist der Schalter mit einem derart großen Kühlkörper wärmeleitend verbunden, dass der Bypassstrom dauerhaft und unterbrochen, insbesondere mehr als eine Stunde, durch den Schalter ableitbar ist. Von Vorteil ist dabei, dass ein leistungsfähiger Schalter verwendbar ist.

Bei einer vorteilhaften Ausgestaltung fungiert eine metallische Fläche einer Leiterplatte, auf welcher der Schalter bestückt ist, als Kühlkörper für den Schalter. Von Vorteil ist dabei, dass kein zusätzlicher Kühlkörper notwendig ist.

Wichtige Merkmale bei der Anordnung zur Ableitung von Ladestrom einer Akkuzelle eines Energiespeichers, insbesondere Balancerschaltung, durch einen steuerbaren Schalter sind, dass ein Mittel zum Vergleichen eines ersten, der an der Akkuzelle anliegenden Spannung entsprechenden Spannungswertes mit einem Referenzspannungswert vorgesehen ist, dessen Ausgangssignal als Ansteuersignal dem steuerbaren Schalter zugeleitet wird und außerdem einem galvanisch getrennten Meldekanal, über welchen ein Analogwert übermittelbar ist.

Von Vorteil ist dabei, dass jeder Akkuzelle eine Balancerschaltung zuordenbar ist. Von Vorteil ist auch, dass die Balancerschaltung nicht zu adressieren ist und somit ein geringer Inbetriebnahmeaufwand, insbesondere kein Aufwand für Software oder Adressierung bei der jeweiligen Balancerschaltung.

Weitere Vorteile ergeben sich aus den Unteransprüchen. Die Erfindung ist nicht auf die Merkmalskombination der Ansprüche beschränkt. Für den Fachmann ergeben sich weitere sinnvolle Kombinationsmöglichkeiten von Ansprüchen und/oder einzelnen Anspruchsmerkmalen und/oder Merkmalen der Beschreibung und/oder der Figuren, insbesondere aus der Aufgabenstellung und/oder der sich durch Vergleich mit dem Stand der Technik stellenden Aufgabe.

Die Erfindung wird nun anhand von schematischen Abbildungen näher erläutert:

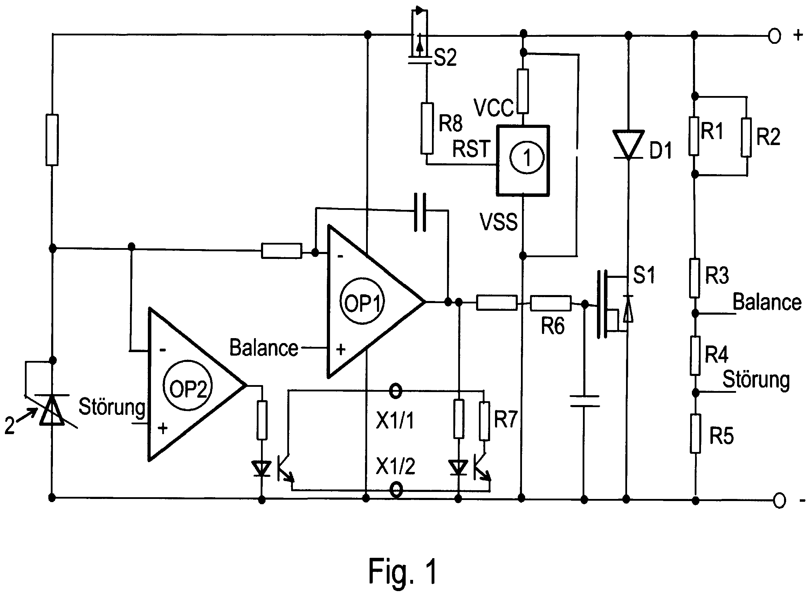

In der Figur 1 ist eine Balancerschaltung für eine Akkuzelle gezeigt. Dabei wird der Pluspol und der Minuspol der Akkuzelle eingangsseitig mit der Balancerschaltung verbunden.

Die Eingangsseite der Balancerschaltung ist mittels des Schalters S1 über die Diode D1 kurzschließbar. Der Schalter ist dabei als Leistungshalbleiterschalter ausgeführt, welcher mit einem genügend großen Kühlkörper verbunden ist, so dass auch bei kurzgeschlossenem Schalter der fließende Ladestrom keine Zerstörung des Schalters bewirkt.

Der Energiespeicher weist insgesamt mehrere in Reihe geschaltete Akkuzellen auf, welcher jeweils eine Balancerschaltung nach Figur 1 parallel zugeschaltet ist.

Somit ist nach Aufladen einer Akkuzelle auf den gewünschten Ladezustand der Schalter S1 schließbar, wodurch der Ladestrom an der Akkuzelle vorbeigeleitet wird und diese somit geschützt ist.

Zur Bestimmung des Erreichens des gewünschten Ladezustandes uns somit des Erreichens beziehungsweise Überschreitens der Ladesollspannung ist eingangsseitig ein Spannungsteiler (R1, R3, R4, R5) angeordnet, wobei der Widerstand R1 durch einen parallel zugeschalteten Widerstand R2 feinabgleichbar ist, so dass die gewünschte Spannungsteilung hochgenau erreichbar ist. Der Spannungsteiler erzeugt zwei Spannungen, die in einem durch R4 wesentlich bestimmten Spannungsabstand voneinander gehalten werden. Wenn also beim Feinabgleich der Widerstand der Parallelschaltung von R1 und R2 verändert wird, ändern sich zwar die beiden Ausgangsspannungen des Spannungsteilers, jedoch bleibt die Spannungsdifferenz zwischen beiden im Wesentlichen gleich.

Die erste der erzeugten Spannungen, vorzugsweise die höhere der erzeugten Spannungen, wird einem Vergleicher OP1 zugeführt, der diese mit einer Referenzspannung vergleicht, welche von einem Mittel 2 zur Erzeugung einer Referenzspannung erzeugt wird. Dieses Mittel 2 ist vorzugsweise temperaturkompensiert ausgeführt, so dass die Referenzspannung im Wesentlichen unabhängig von der Umgebungstemperatur des Mittels 2 erzeugt wird.

Somit ist mittels des Vergleichers OP1 ein Erreichen der Soll-Ladespannung detektierbar und bei Überschreiten wird der Schalter S1 vom Vergleicher OP1 derart angesteuert, dass der Schalter S1 kurzgeschlossen wird.

Außerdem wird vom Vergleicher OP1 das Ausgangssignal auch einem Optokoppler zugeleitet, der einen ansonsten gesperrten Widerstand R7 zwischen den Leitungen X1/1 und X2/2 eines Zweileiterbusses, also Zweidrahtbusses, wirksam werden lässt, insbesondere diesen also verbindet, so dass der Widerstand also mit seinem ersten Anschluss an der Leitung X1/1 angeschlossen und mit seinem zweiten Anschluss an der Leitung X1/2 angeschlossen ist.

Die weiteren Balancerschaltungen sind entsprechend der in Figur 1 gezeigten ausgeführt. Somit sind auch deren Widerstände R7 in entsprechender Weise wirksam machbar mittels entsprechender Optokoppler OP2. Hierzu sind bei einem ersten Ausführungsbeispiel alle ersten Anschlüsse mittels der Leitung X1/1 verbunden und alle zweiten Anschlüsse mittels der Leitung X1/2.

Insgesamt sind also die Widerstände parallel zuschaltbar und der zwischen den beiden Leitungen wirksame Widerstand wird immer kleiner je mehr Akkuzellen aufgeladen sind.

Auf diese Weise ist von einer übergeordneten Einheit, wie Steuerung oder dergleichen, eine Spannung zwischen den Leitungen X1/1 und X1/2 anlegbar und der somit angetriebene Stromwert im Zweileiterbus (X1/1, X1/2) erfassbar. Aus dem Stromwert ist ein Ladezustand bestimmbar.

Die zweite der erzeugten Spannungen, vorzugsweise die niedrigere der erzeugten Spannungen wird einem Vergleicher OP2 zugeführt, der diese mit der Referenzspannung vergleicht, welche von dem Mittel 2 zur Erzeugung einer Referenzspannung erzeugt wird. Somit ist mittels des Vergleichers OP2 ein Erreichen eines kritischen Spannungswertes detektierbar und bei Überschreiten wird statt eines ansonsten erzeugten LOW-Signales ein High-Signal erzeugt, das an einen Optokoppler geleitet wird, der dieses Signal galvanisch getrennt an einen Zweileiter-Bus, welcher die Leitungen X1/1 und X2/2 aufweist, leitet. In Figur 1 wird bei Anliegen eines High-Signals an der Primärseite des Optokopplers ein LOW-Signal an der Sekundärseite weitergemeldet, indem die Leitungen X1/1 und X2/2 des Zweileiterbusses kurzgeschlossen werden. Somit wird einer übergeordneten Steuerung weitergemeldet, dass bei einer der Balancerschaltungen beziehungsweise der jeweiligen zugeordneten Akkuzelle des Energiespeichers ein Störzustand erreicht ist. Somit ist dann der Ladevorgang unterbrechbar und eine Warnung herausgebbar.

Dabei ist dieses Weitermelden in analoger Weise mit geringem Aufwand ausführbar, wozu zwischen den beiden Leitungen des Zweileiterbusses eine Spannung angelegt wird und der somit bewirkte Stromwert im Zweileiterbus bestimmt wird. Oberhalb eines ersten kritischen Stromwertes ist ein Kurzschluss detektiert. Unterhalb dieses kritischen Wertes entspricht der Stromwert dem Ladezustand des Energiespeichers.

In Figur 1 ist auch ein Mittel 1 zur Unterspannungserkennung angeordnet, so dass bei Ausfall der eingangsseitigen Akkuzellspannung oder bei Unterschreiten eines kritischen Mindestwertes an Akkuzellspannung ein Schalter S2 geöffnet wird, welcher zur Versorgung des OP1 und/oder OP2 dient. Somit ist kein Störsignal generierbar und es ist auch kein Widerstand R7 wirksam. Außerdem kann der Schalter S1 nicht mehr angesteuert werden, ist also offen. Die Balancerschaltung schützt sich also selbst gegen Tiefentladung. Darüber hinaus schaltet die Balancerschaltung im Fall einer fehlerhaften Ansteuerung des S1 die Balancerschaltung sich in den Aussetzbetrieb.

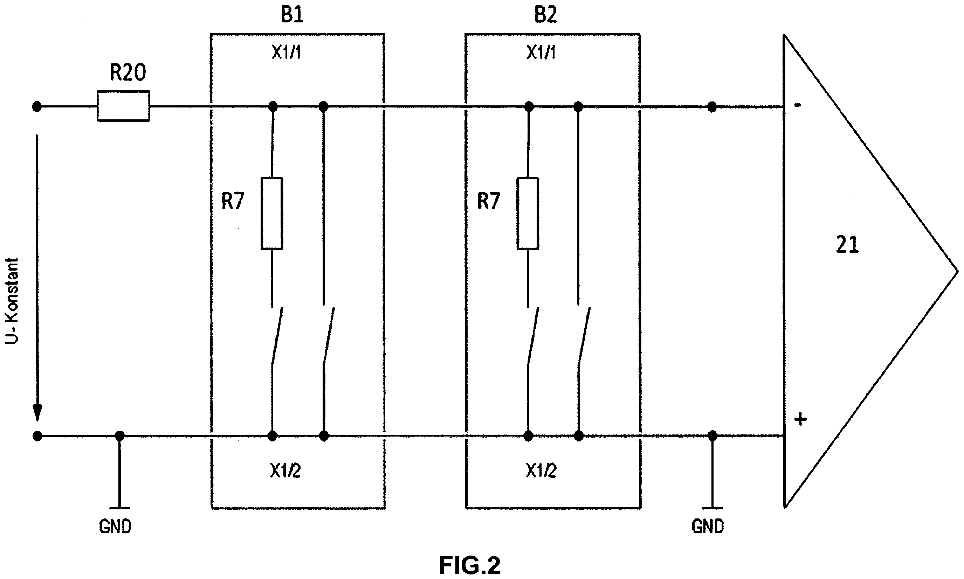

In Figur 2 ist näher gezeigt, wie der Zweileiterbus die Meldungen der Balancerschaltungen in analoger Weise zusammenfasst und erfassbar macht:
Dabei sind beispielhaft zwei der bis zu hundert oder mehr Balancerschaltungen B1 und B2 gezeigt, wobei jeweils nur die Schalter der Sekundärseite der Optokoppler gezeigt sind und der wirksam machbare Kurzschluss beziehungsweise Widerstand R7. Jede der Balancerschaltungen ist gemäß Figur 1 aufgebaut.

Zwischen den Leitungen X1/1 und X1/2 wird eine Konstante Versorgungsspannung von beispielsweise 10 Volt angelegt, wobei ein strombegrenzender Widerstand R20 eingangsseitig vorgesehen ist.

Mittels des Vergleichsmittels 21 ist durch Anordnung nach Figur 2 somit detektierbar durch die am Vergleichsmittel anliegende Spannung, ob eine, zwei oder mehr Balancerschaltungen den jeweiligen Widerstand R7 wirksam gemacht haben oder einen Kurzschluss, also die Störmeldung, oder keine Balancerschaltung aktiv ist.

Die übergeordnete Einheit detektiert also keinen Strom im Zweileiterbus sondern eine abhängig von der Anzahl der wirksam gemachten Widerstände R7 herabgeteilte Spannung. Das Vergleichsmittel 21 ist auch als Analogspannungseingang eines A/D-Wandlers realisierbar, wobei dann die angelegte Spannung mit kritischen Analogwerten verglichen wird.

Auf diese Weise ist auch dieser Zustand gemeldet an die übergeordnete Einheit, insbesondere in analoger Weise.

Alternativ sind auch die Widerstände der Balancerschaltungen in Reihe schaltbar, indem ein jeweiliger X1/1-Anschluss einer Balancerschaltung mit dem X1/2 Anschluss einer nächst nachfolgenden Balancerschaltung verbunden ist.

### Bezugszichnliste

1 Mittel zur Unterspannungserkennung
2 Mittel zur Erzeugung einer Referenzspannung
21 Vergleichsmittel
S1 Schalter
S2 Schalter
D1 Diode
R1 Widerstand
R2 Widerstand
R3 Widerstand
R4 Widerstand
R5 Widerstand
R6 Widerstand
R7 Widerstand
R8 Widerstand
R20 Widerstand
OP1 Vergleichsmittel
OP2 Vergleichsmittel
X1/1 Leitung des Zweileiter-Analog-Busses
X1/2 Leitung des Zweileiter-Analog-Busses
B1 Balancerschaltung
B2 Balancerschaltung

## Patentansprüche

1. Ladegerät für einen Akkumulator, welcher in Reihe geschaltete Akkuzellen aufweist, mit Anordnung zur Steuerung des Ladestroms für eine Akkuzelle,
**wobei** die Anordnung einen steuerbaren Schalter (S1, S2) aufweist, mit welchem der Ladestrom an der Akkuzelle vorbeileitbar ist, insbesondere als Bypassstrom,
**wobei** ein Mittel (OP1, OP2) zum Vergleichen eines ersten, der an der Akkuzelle anliegenden Spannung entsprechenden Spannungswertes mit einem Referenzspannungswert vorgesehen ist, **wobei das Ausgangssignal des Mittels** als Ansteuersignal dem steuerbaren Schalter (S1, S2) zugeleitet wird und außerdem einem galvanisch getrennten Meldekanal, über welchen ein Analogwert übermittelbar ist,
**dadurch gekennzeichnet, dass**
ein Mittel (OP1, OP2) zum Vergleichen eines zweiten, der an der Akkuzelle anliegend **n** Spannung entsprechenden Spannungswertes mit einem kritischen Spannungswert vorgesehen ist, dessen Ausgangssignal einem galvanisch getrennten Meldekanal zugeführt wird, über den ein analoger Wert übermittelbar ist,
wobei von der Anordnung bei Ausfall der Spannung an der Akkuzelle oder bei Unterschreiten eines kritischen Spannungsbetrages der an der Akkuzelle anliegend n Spannung die Versorgung der Mittel (OP1, OP2) zum Vergleichen derart unterbroch n wird, dass die beiden Leitungen des Zweileitermeldebusses nicht kurzgeschlossen werden und auch kein im Wesentlichen endlicher Widerstand zwischen ihnen angelegt wird,
wobei von dr Anordnung bi Überschreiten des kritischen Spannungswrtes die beiden Litungnds Zwilitrbusss kurzgeschloss n werden, insbsnder mittels eines galvanisch getrennt angeordneten Schalter (S1, S2), insbesondere ein s Optokopplers,
wobei von der Anordnung bei Überschreiten des kritischen Referenz-Spannungswertes zwischen den beiden Leitungen des Zweileiterbusses ein Widerstand angelegt wird, insbesondere mittels eines galvanisch getrennt angeordneten Schalter (S1, S2), insbesondere eines Optokopplers,
wobei eine übergeordnete Steuerung die von der jeweiligen Anordnung wirksam gemachten, über den Zweileiterbus zusammengeschalteten Widerstände, also parall I oder in Reihe zusammengeschalteten Widerstände, detektiert und daraus den Ladezustand des Energiespeichers bestimmt und/oder davon abhängig den Ladestrom steuert,
wobei ein Vergleichsmittel (21) derart vorgesehen ist, dass aus der am Vergleichsmittel anliegenden Spannung bestimmt wird, wie viele Bypass-Schalter leitend sind und ob eine Störung vorliegt.

2. Ladegerät nach Anspruch 1,
**dadurch gekennzeichnet, dass**
mittels des steuerbaren Schalters (S1, S2) die Akkuzellenspannung direkt kurzschließbar ist, insbesondere die Pole der Akkuzelle direkt über den steuerbaren Schalter (S1, S2) miteinander verbindbar sind.

3. Ladegerät nach mindestens einem der vorangegangenen Ansprüche,
**dadurch gekennzeichnet, dass**
der erste und der zweite Spannungswert von einem Spannungsteiler erzeugt sind, der feinabgleichbar ist, insbesondere durch Parallelschaltung zweier Widerstände,
insbesondere wobei beim Feinabgleich die Spannungsdifferenz zwischen ersten und zweitem Spannungswert im Wesentlichen konstant bleibt.

4. Ladegerät nach mindestens einem der vorangegangenen Ansprüche,
**dadurch gekennzeichnet, dass**
die Meldekanäle einen analogen Zweileiter-Meldebus bilden, insbesondere also auf einem selben Buskanal geführt sind, insbesondere wobei der Meldebus zu einer übergeordneten Steuerung führt und mehrere gleichartig aufgebaute Anordnungen verbindet.

5. Ladegerät nach mindestens einem der vorangegangenen Ansprüche,
**dadurch gekennzeichnet, dass**
der Schalter (S1, S2) mit einem derart großen Kühlkörper wärmeleitend verbunden ist, dass der Bypassstrom dauerhaft und ununterbrochen, insbesondere mehr als eine Stunde, durch den Schalter (S1, S2) ableitbar ist.

6. Ladegerät nach mindestens einem der vorangegangenen Ansprüche,
**dadurch gekennzeichnet, dass**
eine metallische Fläche einer Leiterplatte, auf welcher der Schalter (S1, S2) bestückt ist, als Kühlkörper für den Schalter (S1, S2) fungiert.

## Claims

1. Charger for a battery which has battery cells connected in series, comprising an arrangement for controlling the charging current for a battery cell,
wherein the arrangement has a controllable switch (S1, S2), by which the charging current can be diverted past the battery cell, in particular as a bypass current,
wherein a means (OP1, OP2) for comparing a first voltage value, corresponding to the voltage applied to the battery cell, with a reference voltage value is provided, the output signal of the means being fed as an actuation signal to the controllable switch (S1, S2) and additionally to a galvanically isolated signalling channel, via which an analogue value can be transmitted,
**characterized in that** a means (OP1, OP2) for comparing a second voltage value, corresponding to the voltage applied to the battery cell, with a critical voltage value is provided, the output signal of said means being fed to a galvanically isolated signalling channel, via which an analogue value can be transmitted,
wherein, in the event of failure of the voltage at the battery cell or if the voltage applied to the battery cell falls below a critical voltage amount, the power supply to the means (OP1, OP2) for comparing is interrupted by the arrangement such that the two wires of the two-wire signalling bus are not short-circuited and also no substantially finite resistance is applied therebetween,
wherein, if the critical voltage value is exceeded, the two wires of the two-wire signalling bus are short-circuited by the arrangement, in particular by means of a switch (S1, S2) arranged in a galvanically isolated manner, in particular an optocoupler,
wherein, if the critical reference voltage value is exceeded, a resistance is applied between the two wires of the two-wire bus by the arrangement, in particular by means of a switch (S1, S2) arranged in a galvanically isolated manner, in particular an optocoupler,
wherein a higher-level controller detects the resistances that have been brought into effect by the respective arrangement and connected together via the two-wire bus, that is to say resistances connected in parallel or in series, and determines therefrom the charging state of the energy store and/or controls the charging current as a function thereof,
wherein a comparison means (21) is provided such that the voltage applied to the comparison means is used to determine how many bypass switches are conducting and whether there is a fault.

2. Charger according to claim 1,
**characterized in that**
the battery cell voltage can be directly short-circuited by means of the controllable switch (S1, S2), in particular the poles of the battery cell can be connected to one another directly via the controllable switch (S1, S2).

3. Charger according to at least one of the preceding claims,
**characterized in that**
the first and the second voltage value are generated by a voltage divider which can be finely adjusted, in particular by connecting two resistances in parallel,
in particular wherein the voltage difference between the first and second voltage value remains substantially constant during the fine adjustment.

4. Charger according to at least one of the preceding claims,
**characterized in that**
the signalling channels form an analogue two-wire signalling bus, that is to say in particular are guided on the same bus channel, in particular wherein the signalling bus leads to a higher-level controller and connects a plurality of identically constructed arrangements.

5. Charger according to at least one of the preceding claims,
**characterized in that**
the switch (S1, S2) is connected in a heat-conducting manner to such a large heat sink that the bypass current can be dissipated by the switch (S1, S2) in a continuous and uninterrupted manner, in particular for more than one hour.

6. Charger according to at least one of the preceding claims,
**characterized in that**
a metal surface of a printed circuit board, on which the switch (S1, S2) is mounted, acts as the heat sink for the switch (S1, S2).

## Revendications

1. Chargeur pour un accumulateur qui présente des cellules d'accumulateur connectées en série, avec un agencement pour commander le courant de charge d'une cellule d'accumulateur,
l'agencement présentant un commutateur commandable (S1, S2) avec lequel le courant de charge peut être détourné de la cellule d'accumulateur, en particulier sous forme de courant de dérivation,
un moyen (OP1, OP2) étant prévu pour comparer une première valeur de tension correspondant à la tension présente à la cellule d'accumulateur avec une valeur de tension de référence, le signal de sortie du moyen étant fourni au commutateur commandable (S1, S2) en tant que signal de commande et en plus à un canal de signalisation isolé électriquement, par lequel une valeur analogique peut être transmise,
**caractérisé en ce**
**qu'**un moyen (OP1, OP2) est prévu pour comparer une deuxième valeur de tension correspondant à la tension présente à la cellule d'accumulateur avec une valeur de tension critique, dont le signal de sortie est fourni à un canal de signalisation isolé électriquement, par lequel une valeur analogique peut être transmise,
l'alimentation des moyens (OP1, OP2) de comparaison étant interrompue par l'agencement en cas de défaillance de la tension à la cellule d'accumulateur ou lorsque la tension présente à la cellule d'accumulateur tombe en dessous d'un niveau de tension critique, de telle sorte que les deux lignes du bus de signalisation bifilaire ne sont pas court-circuitées et qu'aucune résistance sensiblement finie n'est présente entre elles, les deux lignes du bus bifilaire étant court-circuitées par l'agencement en cas de dépassement de la valeur de tension critique, en particulier au moyen d'un commutateur isolé électriquement (S1, S2), en particulier d'un optocoupleur,
une résistance étant appliquée par l'agencement en cas de dépassement de la valeur de tension de référence critique entre les deux lignes du bus bifilaire, en particulier au moyen d'un commutateur électriquement isolé (S1, S2), en particulier d'un optocoupleur,
une unité de commande de niveau supérieur détectant les résistances rendues actives par l'agencement respectif et interconnectées via le bus bifilaire, à savoir en parallèle ou en série, et détermine à partir de cela l'état de charge de l'accumulateur d'énergie et/ou commande en fonction de cela le courant de charge,
un moyen de comparaison (21) étant prévu de telle sorte que la tension présente au moyen de comparaison est utilisée pour déterminer combien de commutateurs de dérivation sont conducteurs et si un dérangement est présent.

2. Chargeur selon la revendication 1,
**caractérisé en ce que** la tension de cellule d'accumulateur peut être directement court-circuitée au moyen du commutateur commandable (S1, S2), en particulier les pôles de la cellule d'accumulateur peuvent être directement reliés entre eux via le commutateur commandable (S1, S2).

3. Chargeur selon au moins l'une des revendications précédentes,
**caractérisé en ce que** la première et la deuxième valeur de tension sont générées par un diviseur de tension finement réglable, en particulier par montage en parallèle de deux résistances,
en particulier la différence de tension entre la première et la deuxième valeur de tension restant essentiellement constante lors du réglage fin.

4. Chargeur selon au moins l'une des revendications précédentes,
**caractérisé en ce que** les canaux de signalisation forment un bus de signalisation bifilaire analogique, en particulier donc sont guidés sur un même canal de bus, en particulier le bus de signalisation menant à une unité de commande de niveau supérieur et reliant plusieurs agencements de construction identique.

5. Chargeur selon au moins l'une des revendications précédentes,
**caractérisé en ce que** le commutateur (S1, S2) est relié de façon thermoconductrice à un dissipateur thermique dimensionné de telle sorte que le courant de dérivation peut être dérivé de manière permanente et ininterrompue, en particulier pendant plus d'une heure, à travers le commutateur (S1, S2).

6. Chargeur selon au moins l'une des revendications précédentes,
**caractérisé en ce qu'**une surface métallique d'une carte de circuit imprimé sur laquelle est monté le commutateur (S1, S2) sert de dissipateur thermique pour le commutateur (S1, S2).
